# FASCICULE DE BREVET EUROPEEN

(11) **EP 0 487 432 B1**
(45) Date de publication et mention de la délivrance du brevet: **06.03.1996**
(21) Numéro de dépôt: 91420401.1
(22) Date de dépôt: 12.11.1991
(51) Int. Cl.: G01T 1/00, G07C 9/00

(54) **Installation de dosimètrie électronique individuelle**
Anlage zur individuellen elektronischen Dosimetrie
Plant for individual electronic dosimetry

(30) Priorité: 21.11.1990 FR 9014602
(43) Date de publication de la demande: 27.05.1992
(73) Titulaire: SCHNEIDER ELECTRIC SA, F-92100 Boulogne-Billancourt (FR)
(72) Inventeur: Schulcz, Francis, F-38050 Grenoble Cedex (FR)
(74) Mandataire: Hecke, Gérard

(56) Documents cités:
- EP-A- 0 300 054
- EP-A- 0 450 992
- US-A- 4 822 990

## Description

La présente invention se rapporte à une installation de dosimètrie électronique individuelle destinée à la mesure et à la surveillance de la dose de radiations absorbée par un individu lors de son séjour dans un local déterminé.

On connaît comme par exemple décrit dans le document EP-A-0 300 054, des installations de dosimétrie électronique individuelle semi-automatique qui comportent chacune un certain nombre de dosimètres, destinés chacun à être portés par un utilisateur lors de son séjour dans le local soumis à d'éventuelles radiations, des lecteurs situés aux entrées et sorties de la zone surveillée, et un centralisateur informatique généralement placé en dehors de cette zone.

A l'entrée de cette zone surveillée, chaque dosimètre portatif est initialisé soit par le rack de stockage sur lequel il repose à une place précise, soit plus généralement par un lecteur voisin de la porte d'entrée: dans ce cas, le dosimètre est constamment porté par l'agent, et ce dernier doit l'introduire dans ce lecteur au passage.

Le dosimètre ainsi activé mesure alors, pendant toute la durée du séjour de l'agent qui le porte dans la zone surveillée, le cumul de dose des radiations auxquelles l'agent a été exposé pendant ce séjour.

En quittant cette zone, l'agent présente son dosimètre à un lecteur de sortie, ou le replace à l'endroit déterminé dans son rack de stockage, ce qui entraîne le transfert des informations qu'il contient vers le centralisateur informatique. Pour réaliser cette opération de lecture, l'agent doit retirer son dosimètre de sa position de port, généralement à hauteur de la poitrine ou à la ceinture, et l'introduire dans un alvéole dans lequel un couplage est réalisé avec un dispositif de lecture, soit par un contact purement électrique, soit par une liaison infra-rouge ou magnétique. Il doit en outre s'identifier, par exemple par une opération de frappe sur le clavier.

L'obligation de s'identifier et de déplacer le dosimètre a pour inconvénient de compliquer singulièrement l'exploitation, en particulier si ce dosimètre est porté sous une combinaison de protection, ou s'il doit être protégé par une enveloppe à l'égard des risques de contamination ou de perturbations.

Par ailleurs, il se peut que l'alvéole de lecture soit contaminé par un dosimètre lors de l'introduction de celui- ci, et transmettre alors cette contamination aux autres dosimètres introduits ultérieurement dans cet alvéole.

Enfin, l'obligation pour chaque utilisateur de marquer un temps d'arrêt lors des passages d'entrée et de sortie dans la zone surveillée réduit le flux de passage et constitue elle aussi de ce fait une gêne d'exploitation.

L'invention vise à remédier à tous ces inconvénients en permettant de supprimer toute manipulation des dosimètres portatifs individuels lors des passages ou accès d'entrée et de sortie de la zone ou local à surveiller, et en permettant les opérations dosimètriques et d'identifications nécessaires sans nécessiter l'arrêt du porteur à ces passages ou accès.

Le document EP-A-450.992 (date de priorité du 06.04.1990, et publié le 09.10.91) se rapporte à un dosimètre électronique portatif pour mesurer le débit de doses au moyen d'un circuit de détection associé à un microprocesseur. Un dispositif de couplage coopère avec le microprocesseur, et comporte un ensemble émetteur et récepteur, ainsi qu'un commutateur permettant de choisir le mode de fonctionnement en réception ou en émission.

L'objet de l'invention consiste à perfectionner une installation de dosimètrie électronique individuelle destinée à la mesure et à la surveillance de la dose des radiations absorbée par un individu porteur d'un dosimètre électronique lors de son séjour dans un local déterminé.

Selon l'invention, chaque dosimètre portatif individuel est composé d'au moins deux sous-ensembles, dont un premier sous-ensemble connu en soi constituant un dosimètre électronique proprement dit, ainsi qu'un organe d'identification, et un second sous-ensemble constituant un dispositif de transmissions par onde porteuse apte à réaliser des échanges ou transmissions d'informations entre ce premier sous-ensemble et un dispositif électronique de lecture placé à chaque accès de cette zone. Le dosimètre est doté d'un second sous-ensemble comportant un dispositif de transmission par ondes porteuses apte à réaliser des transmissions et/ou des échanges d'informations entre le premier sous-ensemble et un dispositif électronique de lecture placé à chaque accès de cette zone, et que ledit dispositif électronique de lecture comporte :
- des moyens pour traiter les informations de mesure et d'identification qui lui sont transmises par chaque dosimètre,
- et des moyens pour transmettre vers le dosimètre un signal de commande, notamment de proximité destiné à activer le second sous-ensemble pour déclencher la transmission par onde porteuse des informations de mesure et d'identification.

De toute façon, l'invention sera bien comprise, et ses avantages et autres caractéristiques ressortiront, lors de la description suivante d'un exemple non limitatif de réalisation d'une telle installation de dosimètrie électronique individuelle automatique, en référence au dessin schématique annexé dans lequel:
La figure 1 est un schéma général d'implantation de cette installation de surveillance dosimètrique; et
La figure 2 est un schéma synoptique d'un des dosimètres et d'un lecteur associé.

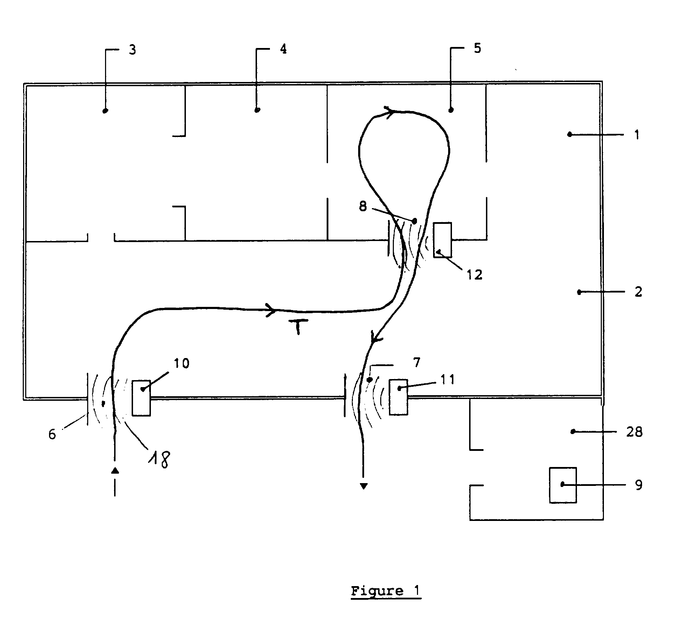

En se référant à la figure 1, le local 1 ou zone à surveiller a été pour plus de clarté entouré d'un double trait. Il comporte dans cet exemple une grande pièce principale 2 et trois plus petites pièces 3,4,5, la pièce 5 étant un local nécessitant une surveillance particulière.

On accède à l'ensemble de la zone 1 par deux portes d'entrée/sortie 6 et 7, et au local particulier 5 par une seule porte d'entrée/sortie 8.

Dans un local 28, situé en dehors de la zone contrôlée 1, est placé un organe logique central de commande et de calcul 9, ou "centralisateur".

A chacun des accès 6,7 à la zone 1 et à l'accès 8 au local particulier 5 est installé un dispositif électronique de lecture, ou lecteur, respectivement 10, 11 et 12, qui comporte un émetteur/récepteur radioélectrique d'informations, apte à correspondre ainsi avec chaque dosimètre individuel, et qui est par ailleurs relié par liaison galvanique informatique à l'organe centralisateur 9.

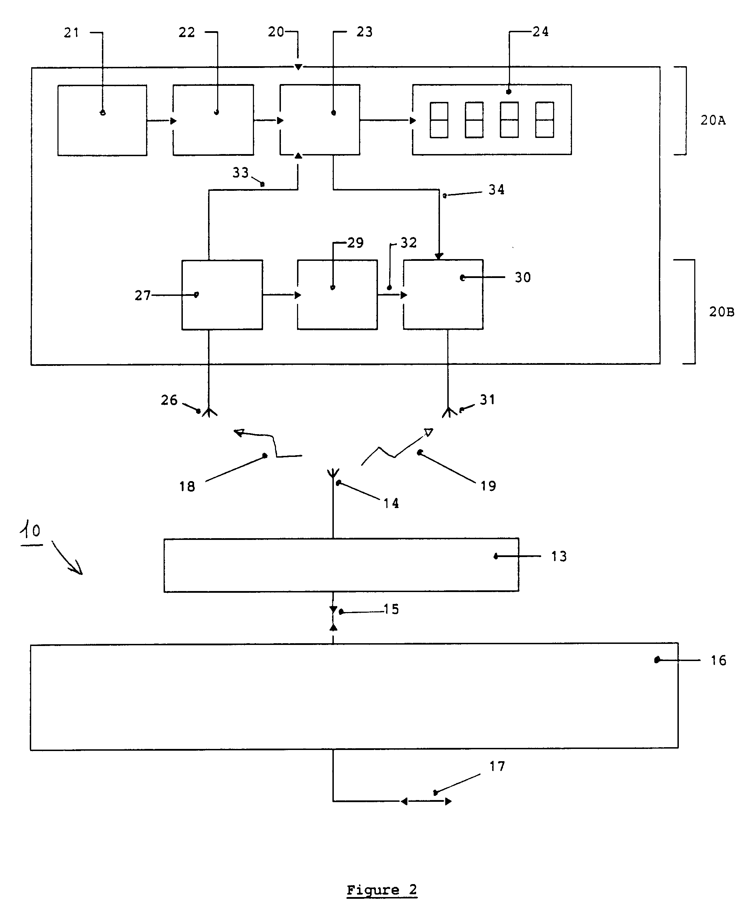

En se reportant à la figure 2, chaque lecteur (par exemple le lecteur 10) est constitué d'un sous-ensemble 13 de transmission d'informations par ondes radioélectriques, équipé d'une antenne 14 d'émission/réception et relié par une liaison bidirectionnelle 15 à un sous-ensemble de traitement informatique 16, lui même connecté à l'organe central 9 précité par une liaison informatique 17.

Le sous-ensemble de transmission 13 a pour première fonction de créer en permanence, par émission d'une onde radioélectrique 18, un champ électromagnétique dans un volume d'activation des dosimètres, et pour seconde fonction d'assurer la réception des données du dosimètre 20 transmises par une autre onde radioélectrique 19, et éventuellement la retransmission d'informations à charger dans ce dosimètre 20.

Le sous-ensemble de traitement 16 transforme les données échangées avec le dosimètre 20 en un standard de liaison informatique. Il assure avantageusement en outre une signalisation locale, permettant par exemple à l'utilisateur de vérifier la bonne réalisation des échanges ou l'invitant à passer une nouvelle fois devant le lecteur si nécessaire. Il assure aussi, et préférentiellement, une mémorisation locale des informations en cas de rupture accidentelle de liaison avec l'organe centralisateur 9.

Le rôle de l'organe centralisateur 9 consiste à gérer les informations dosimétriques reçues: concentration, mémorisation, exploitation. Accessoirement, il peut aussi gérer les autorisations d'accès dans la zone 1 à surveiller et assurer ainsi la surveillance des agents en zone: l'installation de dosimètrie joue alors également le rôle d'installation de contrôle d'accès.

Chaque dosimètre, tel que le dosimètre 20 dont on trouve sur la figure 2 un schéma synoptique, comporte:
- un premier sous-ensemble 20A de mesure dosimètrique comprenant un détecteur de radiations 21, un amplificateur-discriminateur d'impulsions 22, et un microprocesseur 23 qui compte ces impulsions et en déduit la dose de radiations reçue, cette mesure étant préférentiellement transmise à un afficheur 24.
- un second sous-ensemble 20B de transmission radioélectrique qui comporte une antenne 26 de réception des ondes radioélectriques 18 en provenance du lecteur 10, un ensemble (27) de détection et éventuellement de démodulation de l'onde reçue 18, un diviseur de fréquence porteuse 29, un ensemble 30 de modulation des signaux transmis par le microprocesseur 23 et d'émission, par une antenne 31, de ces signaux modulés sous forme de l'onde radioélectrique 19 précitée.

Le dispositif 29 est par exemple un diviseur par deux, de sorte que l'onde qu'il applique sur l'entrée 32 du modulateur du dispositif d'émission 30, et qui est la porteuse émise par l'antenne 31, est de fréquence moitié de celle de l'onde 18 reçue par l'antenne 26. On pourra aussi utiliser d'autres solutions telles que, modification du mode de modulation ou de polarisation entre onde reçue et émise.

Les informations détectées ou démodulées obtenues en sortie 33 du récepteur 27 sont transmises pour traitement au micro-processeur 23. Il s'agit fondamentalement du signal de proximité du lecteur 10, mais il peut s'agir également d'informations de commande et/ou de dialogue: signal de commande de réinitialisation, signal de commande de lecture de dose, signal de passage en mode "actif", signal de passage en mode "pause", commande de réglage de seuil d'alarme, etc..

Les données utiles contenues dans le microprocesseur 23 sont transmises, via la liaison 34, au modulateur de l'émetteur 30 pour être transmises par ondes radioélectriques au lecteur 10, la réception des ondes 19 et la transmission des ondes 18 par celui-ci s'effectuant pratiquement en simultané. Ces données utiles portent bien évidemment sur la dose de radiations emmagasinée, mais elles concernent également l'identification du dosimètre et/ou de l'utilisateur qui le porte, l'indication de la valeur du seuil d'alarme, etc..

Sur la figure 1, un exemple possible de trajet T d'un utilisateur ou agent a été représenté par des flèches. L'agent entre dans le local 1 par la porte 6, et est bien entendu porteur d'un dosimètre individuel tel que le dosimètre 20.

A son passage au niveau du lecteur 10, le dosimètre est automatiquement réinitialisé, son seuil d'alarme est ajusté à la valeur adéquate pour la zone 1, et il est passé en mode "actif", toutes ces opérations s'effectuant sans que l'agent n'intervienne, ni même s'en aperçoive, le dosimètre pouvant rester caché sous ses vêtements. L'organe central 9 est également informé de l'identité de l'agent et de l'instant de son passage (heure, minutes, secondes).

Lors de sa traversée du local 2, vers la porte 8, le dosimètre 20 accumule, dans la mémoire de son microprocesseur 23, la dose de radiations reçues.

Le passage devant le lecteur 12 de la porte 8 déclenche par exemple un contrôle d'autorisation d'accès dans le local 5, puis une prise de mesure de dose, un changement de réglage de seuil d'alarme, et éventuellement une nouvelle réinitialisation. Des opérations analogues, mais inverses, sont de même effectuées en sortie de ce local 5.

Au niveau de la porte 7, le lecteur 11 effectue une nouvelle lecture de dose, une nouvelle lecture de contrôle d'accès, et commande le passage du dosimètre 20 en mode "pause".

Comme il va de soi, l'invention n'est pas limitée à l'exemple de réalisation qui vient d'être décrit. C'est ainsi que, par exemple, bien que les transmissions par ondes radioélectriques soient préférentielles pour l'installation, il pourrait tout aussi bien être fait d'usage d'autres ondes de transmission: ondes infra-rouge, ultras-sons,...Dans une forme de réalisation simplifiée, le récepteur 27 pourrait être seulement prévu pour détecter une onde 18 donnant simplement une information de proximité d'un lecteur: à la réception du signal de proximité, le dosimètre 20 enverrait simplement, sans autre échange d'informations, ses données de mesure et d'identification en direction de ce lecteur.

## Revendications

1. Installation de dosimètrie électronique individuelle destinée à la surveillance de la dose de radiations absorbée par un individu porteur d'un dosimètre électronique (20) lors de son séjour dans un local déterminé (1), comprenant au moins un dosimètre portatif individuel (20), composé d'un premier sous-ensemble (20A) à microprocesseur (23) pour mesurer la dose de radiations absorbée, et pour générer des données d'identification,
caractérisé en ce que le dosimètre (20) est doté d'un second sous-ensemble (20B) comportant un dispositif de transmission par ondes porteuses (18,19) apte à réaliser des transmissions et/ou des échanges d'informations entre le premier sous-ensemble (20A) et un dispositif électronique de lecture (10, 11, 12) placé à chaque accès de cette zone, et que ledit dispositif électronique de lecture comporte :
- des moyens pour traiter les informations de mesure et d'identification qui lui sont transmises par chaque dosimètre (20),
- et des moyens pour transmettre vers le dosimètre (20) un signal de commande, notamment de proximité (18) destiné à activer le second sous-ensemble (20B) pour déclencher la transmission par onde porteuse (19) des informations de mesure et d'identification.

2. Installation de dosimètrie individuelle selon la revendication 1, caractérisée en ce que le second sous-ensemble (20B) comporte un récepteur (27) relié électriquement au microprocesseur (23) et apte à démoduler des informations transmises par le dispositif de lecture (10), et à permettre ainsi un échange quasi-simultané d'informations et/ou instructions entre le dispositif de lecture (10) et le premier sous-ensemble (20A).

3. Installation selon l'une quelconque des revendications 1 ou 2, caractérisée en ce qu'il est prévu un dispositif de lecture supplémentaire (12) à chaque accès (8) vers une zone particulière (5) du local (1) à surveiller.

4. Installation selon l'une des revendications 1 à 3, caractérisée en ce que chaque dispositif de lecture (10,11,12) est relié, par une liaison informatique (17), à un organe central (9) situé en dehors dudit local (1).

5. Installation selon l'une des revendications 1 à 4, caractérisée en ce que les ondes porteuses utilisées (18,19) sont des ondes radioélectriques.

6. Dosimètre électronique portatif individuel (20), comprenant un premier sous-ensemble (20A) à microprocesseur pour mesurer la dose de radiations absorbée et pour générer des données d'identification, dosimètre
caractérisé en ce qu'il comporte
un second sous-ensemble (20B) comprenant un dispositif de transmission par ondes porteuses radioélectriques destiné à réaliser des transmissions et/ou des échanges d'informations entre le premier sous-ensemble (20A) et un dispositif électronique de lecture placé à l'extérieur du dosimètre, ledit dispositif de transmission étant équipé :
- d'un récepteur (27) associé à une antenne (26) de réception susceptible de recevoir un signal de commande issu du dispositif de lecture pour piloter le microprocesseur (23),
- d'un circuit (30) de modulation des signaux transmis par le microprocesseur (23), ledit circuit étant associé à une antenne (31) d'émission.

## Patentansprüche

1. Anordnung zur einzelpersonbezogenen elektronischen Dosimetrie, welche dazu dient, die von einer, ein elektronisches Dosimeter (20) tragenden Person während ihres Aufenthalts in einem bestimmten Raum (1) aufgenommene Strahlungsdosis zu überwachen und mindestens ein einzelpersonbezogenes tragbares Dosimeter (20) umfaßt, das eine erste mikroprozessorbestückte Funktionsbaugruppe (20A) zur Messung der aufgenommenen Strahlungsdosis sowie zur Erzeugung von Identifikationsdaten aufweist,
dadurch gekennzeichnet, daß das Dosimeter (20) eine zweite Funktionsbaugruppe (20B) aufweist, die eine Vorrichtung zur Datenübertragung mit Hilfe von Trägerwellen (18, 19) enthält, welche in der Lage ist, eine Datenübertragung und/oder einen Datenaustausch zwischen der ersten Funktionsbaugruppe (20A) und einem, an jedem Zugangspunkt (10, 11, 12) des genannten Bereichs installierten elektronischen Lesegerät durchzuführen und das genannte elektronische Lesegerät
- Mittel zur Verarbeitung der ihm über jedes Dosimeter (20) zugeführten Meß- und Identifikationsdaten
- sowie Mittel zur Übertragung eines Steuersignals, insbesondere eines Entfernungsmeßsignals (18) an das Dosimeter (20) umfaßt, das dazu dient, die zweite Funktionsbaugruppe (20B) zu aktivieren, um die Übertragung der Meß- und Identifikationsdaten mit Hilfe einer Trägerwelle (19) zu veranlassen.

2. Anordnung zur individuellen Dosimetrie nach Anspruch 1, dadurch gekennzeichnet, daß die zweite Funktionsbaugruppe (20B) einen elektrisch mit dem Mikroprozessor (23) verbundenen Empfänger (27) enthält, der in der Lage ist, die vom Lesegerät (10) übertragenen Daten zu demodulieren, und so einen praktisch zeitgleichen Austausch von Daten und/oder Befehlen zwischen dem Lesegerät (10) und der ersten Funktionsbaugruppe (20A) ermöglicht.

3. Anordnung nach irgendeinem der Ansprüche 1 oder 2, dadurch gekennzeichnet, daß ein zusätzliches Lesegerät (12) an jedem Zugangspunkt (8) zu einem Sonderbereich (5) des zu überwachenden Raums (1) vorgesehen ist.

4. Anordnung nach einem der Ansprüche 1 bis 3, dadurch gekennzeichnet, daß jedes Lesegerät (10, 11, 12) über eine EDV-Steuerleitung (17) mit einem außerhalb des genannten Raums (1) angeordneten Zentralrechner (9) verbunden ist.

5. Anordnung nach einem der Ansprüche 1 bis 4, dadurch gekennzeichnet, daß die verwendeten Trägerwellen (18, 19) Funkwellen darstellen.

6. Individuelles, tragbares elektronisches Dosimeter (20), das eine erste mikroprozessorbestückte Funktionsbaugruppe (20A) zur Messung der aufgenommenen Strahlungsdosis und zur Erzeugung der Identifikationsdaten umfaßt, dadurch gekennzeichnet, daß es
eine zweite Funktionsbaugruppe (20B) umfaßt, die eine Einrichtung zur Datenübertragung mit Funkträgerwellen enthält, welche dazu dient, die Übertragung und/oder den Austausch von Daten zwischen der ersten Funktionsbaugruppe (20A) und einem außerhalb des Dosimeters angeordneten elektronischen Lesegerät durchzuführen, wobei die genannte Übertragungseinrichtung
- einen Empfänger (27) mit einer zugeordneten Empfangsantenne (6) zum Empfang eines vom Lesegerät ausgesandten Steuersignals zur Ansteuerung des Mikroprozessors (23) sowie
- eine Schaltung (30) zur Modulation der vom Mikroprozessor (23) übertragenen Signale enthält, wobei die genannte Schaltung einer Sendeantenne (31) zugeordnet ist.

## Claims

1. An individual electronic dosimetry installation designed for surveillance of the radiation dose absorbed by an individual carrying an electronic dosimeter (20) during his stay in a specific zone (1), comprising at least one portable individual dosimeter (20), composed of a first sub-assembly (20A) with a microprocessor (23) to measure the radiation dose absorbed, and to generate identification data,
characterized in that the dosimeter (20) is equipped with a second sub-assembly (20B) comprising a transmission device by carrier waves (18, 19) able to perform data exchanges and/or transmissions between the first sub-assembly (20A) and an electronic reading device (10, 11, 12) placed at each access to this zone, and that said electronic reading device comprises :
- means for processing the measurement and identification data which are transmitted to it by each dosimeter (20),
- and means for transmitting to the dosimeter (20) a control signal, notably a proximity signal (18) designed to activate the second sub-assembly (20B) to trigger transmission by carrier wave (19) of the measurement and identification data.

2. The individual dosimeter installation according to claim 1, characterized in that the second sub-assembly (208) comprises a receiver (27) electrically connected to the microprocessor (23) and able to demodulate data transmitted by the reading device (10), and to thus enable an almost instantaneous exchange of data and/or instructions between the reading device (10) and the first sub-assembly (20A).

3. The installation according to either of the claims 1 or 2, characterized in that an additional reading device (12) is provided at each access point (8) to a particular room (5) of the zone (1) to be monitored.

4. The installation according to one of the claims 1 to 3, characterized in that each reading device (10, 11, 12) is connected by a computer link (17) to a central device (9) located outside said zone (1).

5. The installation according to one of the claims 1 to 4, characterized in that the carrier waves (18, 19) used are radioelectric waves.

6. An individual portable electronic dosimeter (20), comprising a first sub-assembly (20A) with a microprocessor to measure the radiation dose absorbed and to generate identification data, a dosimeter
characterized in that it comprises
a second sub-assembly (20B) comprising a transmission device by radioelectric carrier waves designed to perform data transmissions and/or exchanges between the first sub-assembly (20A) and an electronic reading device located outside the dosimeter, said transmission device being equipped with :
- a receiver (27) associated with a receiver aerial (26) designed to receive a control signal coming from the reading device to control the microprocessor (23),
- a modulation circuit (30) of the signals transmitted by the microprocessor (23), said circuit being associated with a transmission aerial (31).
